# EUROPÄISCHE PATENTANMELDUNG

(11) **EP 0 954 159 A2**
(43) Veröffentlichungstag der Anmeldung: **03.11.1999**
(21) Anmeldenummer: 99107907.0
(22) Anmeldetag: 21.04.1999
(51) Int. Cl.: H04M 17/02

(54) **Kommunikationsendgerät zur wahlweisen Aufnahme und Auswertung von Wertkarten oder Münzen**

(30) Priorität: 30.04.1998 DE 19819512
(71) Anmelder: SIEMENS AKTIENGESELLSCHAFT, 80333 München (DE)
(72) Erfinder: Brandstetter, Alfred, 82140 Olching (DE); Schowandek, Emil, 82152 Planegg (DE)

(57) **Zusammenfassung**

Bei einem aus einem Wertkartenfernsprecher (1, 2, 9) und einem ihm zugeordneten Münzmodul (3) soll eine Möglichkeit aufgezeigt werden, über die angefallenen Gesprächskosten einen Nachweis zu erstellen.

Dies wird dadurch realisiert, daß im Münzmodul (3) ein Belegdrucker angeordnet ist, der auf Anforderung einen Ausdruck über die Gesprächskosten erstellt und diesen Ausdruck über die Münzrückgabe ausgibt.

## Beschreibung

Die vorliegende Erfindung betrifft ein aus einem Wertkartenfernsprecher und einem ihm zugeordneten Münzmodul bestehendes Kommunikationsendgerät.

Bei einem vorgeschlagenen Gerät dieser Art besteht das Kommunikationsendgerät aus einem herkömmlichen Wertkartenfernsprecher sowie einem separaten Münzmodul, der mit dem Wertkartenfernsprecher mechanisch und elektrisch verbunden ist. Dabei ist der Wertkartenfernsprecher außermittig auf dem Münzmodul angeordnet, wobei im frei zugänglichen Frontabschnitt des Münzmoduls der Münzeinwurf, die Münzrückgabe sowie ein Display zur Anzeige von Betriebszuständen des Münzmoduls vorgesehen sind.

Das Münzmodul selbst ist als zweiteiliges Gehäuse gestaltet, dessen Gehäuseteile über Scharniere schwenkbar verbunden und durch einen in seinem Inneren angeordneten, elektrisch wirkenden Schließmechanismus versperrt sind. Dieser Schließmechanismus kann durch Einhaltung mehrerer Sicherungsmaßnahmen (spezielle PIN-gesicherte Servicekarte, kryptografisch gesicherte Verbindung, Zusammenarbeit mit einem Hintergrundsystem) kurzfristig zum Wechsel der Münzkassette geöffnet werden.

Bei einem derartigen Kommunikationsendgerät ist der Wunsch geäußert worden, nach Beendigung eines Gespräches einen Nachweis über die dabei entstandenen Kosten zu erhalten.

Aufgabe der vorliegenden Erfindung ist es daher, das eingangs genannte Kommunikationsendgerät so zu gestalten, daß mittels des Gerätes ein Nachweis erstellt werden kann.

Diese Aufgabe wird dadurch gelöst, daß innerhalb des Münzmoduls ein Belegdrucker angeordnet ist, der auf Anforderung einen Ausdruck über die Gesprächskosten erstellt und diesen Ausdruck über die Münzrückgabe ausgibt.

Das Einbringen eines Belegdruckers in den Innenraum des Münzmoduls hat einmal den Vorteil, daß dieser Umbau als Nachrüstung des Münzmoduls vonstatten gehen kann, ohne das Gesamtbild des Kommunikationsendgerätes zu verändern. Zum anderen werden durch die zuvor beschriebenen Sicherungsmaßnahmen zum Öffnen des Münzmoduls ebenfalls vandalismusbedingte Angriffe auf den Belegdrucker weitgehend ausgeschlossen.

Im Bedarfsfall kann nunmehr vom Benutzer des Kommunikationsendgerätes ein Ausdruck über die Kosten seines Gespräches angefordert werden, der ihm über die Münzrückgabeöffnung zugestellt wird.

Dieser Belegdrucker wird zweckmäßig über die zentrale Steuereinheit des Wertkartenfernsprechers gesteuert, wobei ferner über das im Wertkartenfernsprecher bereits teilweise vorhandene Hintergrundsystem Betriebszustände des Belegdruckers überprüfbar sind. Hierbei können z. B. Statistikdaten zum Belegdrucker, ordnungsgemäßer oder defekter Zustand des Belegdruckers oder auch eine Meldung über den Papiervorrat übertragen und überprüft werden. Somit läßt sich auch der Service des Belegdruckers optimal steuern.

Weiterhin besteht die Möglichkeit, über das genannte Hintergrundsystem zusätzliche Informationen auf den Ausdruck des Belegdruckers aufzubringen. Diese zusätzlichen Informationen können Angaben über den Standort, das Datum und die Zeit, Hinweise auf ortsbezogene Veranstaltungen oder auch Reklamehinweise sein. In Grenzgebieten besteht z. B. die Möglichkeit, die Ausdrucke zweisprachig zu erstellen.

Eine Anforderung des Ausdrucks kann über eine vorgegebene Tastenkombination der Tastatur des Wertkartenfernsprechers oder auch menügesteuert über das Display des Wertkartenfernsprechers oder des Münzmoduls erfolgen.

Die Erfindung soll im folgenden anhand von Ausführungsbeispielen näher erläutert werden.

Es zeigt jeweils in perspektivischer Ansicht
Figur 1 eine erste Ausführungsform eines auf ein separates Münzmodul angeordneten Wertkartenfernsprechers,
Figur 2 eine zweite Ausführungsform eines mit einem separaten Münzmodul verbundenen Wertkartenfernsprechers,
Figur 3 eine dritte Ausführungsform eines mit einem separaten Münzmodul verbundenen Wertkartenfernsprechers.

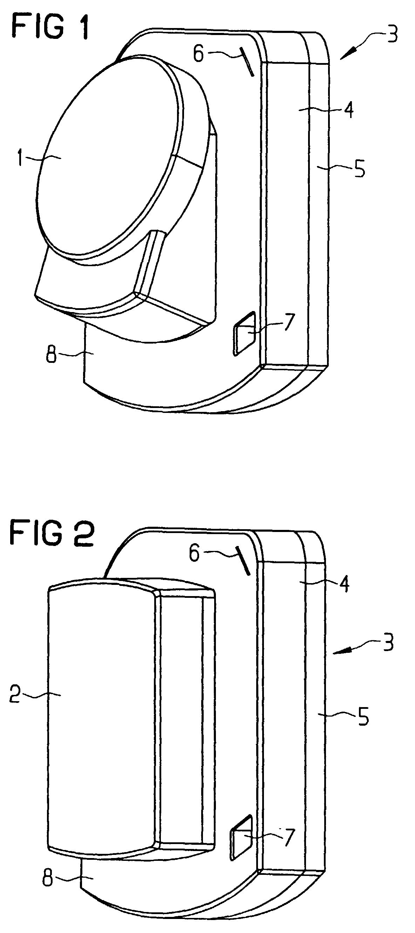

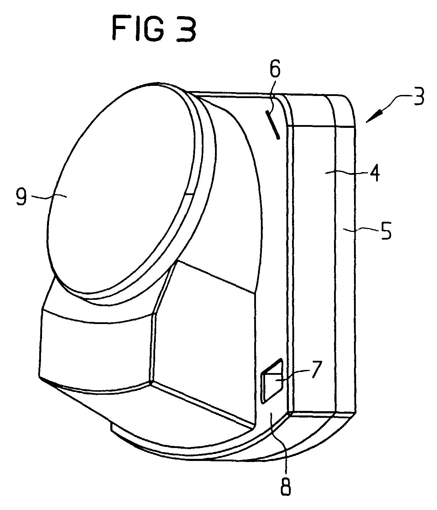

Bei den vorliegenden Anordnungen soll bei einem Wertkartenfernsprecher die Möglichkeit geschaffen werden, zum Telefonieren neben der Wertkarte auch Münzen zu verwenden. Zu diesem Zweck sind den in den Figuren 1, 2 und 3 dargestellten Wertkartenfernsprechern 1, 2 und 9 jeweils das gleiche Münzmodul 3 zugeordnet. Diese beiden jeweils kombinierten Geräte 1 und 3 bzw. 2 und 3 bzw. 9 und 3 sind miteinander elektrisch und mechanisch verbunden.

Das Münzmodul 3 ist als separates Bauteil gestaltet und besteht aus den beiden Gehäuseteilen 4 und 5, die zu Wartungsund Montagezwecken bzw. zum Kassettenwechsel über hier nicht näher dargestellte Scharniere schwenkbar verbunden sind. Beide Gehäuseteile 4 und 5 sind im geschlossenen Zustand durch ein von außen nicht zugängliches, nur elektrisch betätigbares Schloß miteinander verriegelt.

Die drei Wertkartenfernsprecher sind in den Ausführungsbeispielen nur angedeutet, ohne Details wie Kartenaufnahme, Hörer und Anschlußschnur, Sondertasten, Display usw. näher zu zeigen. Hierbei ist lediglich die jeweilige außermittige Befestigung der Wertkartenfernsprecher 1, 2 und 9 auf dem Münzmodul 3 von Bedeutung, da durch diese Plazierung auf der in der Bildebene rechts befindlichen Vorderfront 8 des Gehäuseteils 4 hinreichend Platz zur Verfügung steht, um den als Schlitz gestalteten Münzeinwurf 6 sowie die Münzrückgabe 7 vorzusehen. Durch eine derartige Anordnung der Wertkartenfernsprecher 1, 2 und 9 sowie Münzeinwurf 6 und Münzruckgabe 7 wird dem Benutzer signalisiert, daß er dieses öffentliche Kommunikationsendgerät wahlweise mit Münzen oder Wertkarten betreiben kann.

Innerhalb des Münzmoduls 3 können Vorrichtungen zur elektronischen Prüfung und Weiterleitung von Münzen sowie eine Münzkassette vorgesehen werden.

Der Münzmodul 3 dient weiterhin zur Aufnahme eines Belegdrukkers, der jeweils auf Anforderung des Benutzers einen Ausdruck über die Gesprächskosten erstellt. Der erstellte Ausdruck wird über die Münzrückgabeöffnung 7 an den Benutzer ausgegeben.

## Patentansprüche

1. Aus einem Wertkartenfernsprecher (1, 2, 9) und einem ihm zugeordneten Münzmodul (3) bestehendes Kommunikationsendgerät, **dadurch gekennzeichnet,** daß innerhalbdes Münzmoduls (3) ein Belegdrucker angeordnet ist, der auf Anforderung einen Ausdruck über die Gesprächskosten erstellt und diesen Ausdruck über die Münzrückgabe ausgibt.

2. Kommunikationsendgerät nach Anspruch 1, **dadurch gekennzeichnet,** daß der Belegdrucker über die zentrale Steuereinheit des Wertkartenfernsprechers gesteuert ist.

3. Kommunikationsendgerät nach Anspruch 1, **dadurch gekennzeichnet,** daß über das im Wertkartenfernsprecher (1, 2, 9) bereits teilweise vorhandene Hintergrundsystem Betriebszustände des Belegdruckers überprüfbar sind.

4. Kommunikationsendgerät nach Anspruch 1 und Anspruch 3, **dadurch gekennzeichnet,** daß über das genannte Hintergrundsystem zusätzliche Informationen auf den Ausdruck des Belegdruckers aufgebracht werden.

5. Kommunikationsendgerät nach Anspruch 1, **dadurch gekennzeichnet,** daß die Anforderung des Ausdrucks über eine vorgegebene Tastenkombination der Tastatur des Wertkartenfernsprechers (1, 2, 9) oder menügesteuert über das Display des Wertkartenfernsprechers (1, 2, 9) oder des Münzmoduls (3) erfolgt.
